Europäisches Patentamt

European Patent Office

Office européen des brevets

(11) Numéro de publication: **0 200 608**
B1

# FASCICULE DE BREVET EUROPEEN

(45) Date de publication du fascicule du brevet:
08.11.89

(51) Int. Cl.⁴: **G01B 13/00**, G01D 5/42

(21) Numéro de dépôt: **86400733.1**

(22) Date de dépôt: **04.04.86**

(54) Dispositif économiseur automatique d'air comprimé destiné à être monté sur un comparateur pneumatique.

(30) Priorité: **05.04.85 FR 8505231**

(43) Date de publication de la demande:
**10.12.86 Bulletin 86/45**

(45) Mention de la délivrance du brevet:
**08.11.89 Bulletin 89/45**

(84) Etats contractants désignés:
**AT BE DE GB IT NL SE**

(56) Documents cités:
**BE-A- 482 126**
**DE-A- 2 008 451**
**DE-A- 2 216 679**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Lethiais, Jean-Claude, Le Mesnil - Broquet,**
**F-27110 Le Neubourg(FR)**

## Description

La présente invention se rapporte au domaine du contrôle dimensionnel et vise plus particulièrement un dispositif économiseur automatique d'air comprimé destiné à être monté sur un comparateur pneumatique.

Les nombreuses applications de ce dispositif économiseur sont essentiellement celles du comparateur associé :

- contrôle dimensionnel de pièces usinées, soit aux postes de contrôle proprement dits, soit auprès des machines, en self-contrôle ;
- calibrage de pièces en cours d'usinage sur diverses machines-outils ;
- contrôle du positionnement, sur machine, de pièces à usiner ou d'outils de coupe.

Le document DE-A 2 216 679 décrit un comparateur pneumatique qui incorpore notamment un gicleur de mesure et un distributeur d'air comprimé entre lesquels est disposé un commutateur relié pneumatiquement à un gicleur de signal.

L'invention propose de réaliser une économie substantielle de consommation pneumatique durant les périodes inter-contrôle sans avoir recours à une manipulation de robinetterie, avec un dispositif particulièrement simple, efficace et fiable, qui excite ou désexcite un manostat au moyen d'une micro-fuite.

Suivant une particularité essentielle de l'invention, ce dispositif économiseur du type interposé entre la capsule de mesure du comparateur associé, et un distributeur à clapet, comprend :

- un gicleur de réglage disposé dans une canalisation supérieure entre la capsule de mesure et le distributeur ;
- un gicleur de mesure disposé dans une canalisation inférieure entre la capsule de mesure et le distributeur ;
- un gicleur économiseur disposé entre le gicleur de mesure et le filtre ;
- un sélecteur de circuit disposé entre les gicleurs économiseur et de mesure, et relié à ladite canalisation supérieure en amont du gicleur de réglage ;
- et un relais manostatique relié au distributeur, à ladite canalisation inférieure entre le gicleur de mesure et la capsule de mesure, et à l'amont du gicleur économiseur ;

ces trois gicleurs et ce sélecteur de circuit étant logés à l'intérieur d'un bloc de distribution muni de deux couvercles inférieur et supérieur, et sur lequel sont fixés le distributeur à clapet et le relais manostatique.

Le choix d'un bloc de distribution servant en même temps de plaque de base pour recevoir un relais manostatique et un distributeur permet de rendre cet économiseur d'air très compact.

L'unique réglage du seuil manostatique à un niveau très bas permet d'assurer une économie d'air importante et variable suivant les combinaisons pneumatiques adaptées et le type d'utilisation, autonome ou en batterie.

D'autres particularités et avantages de l'invention apparaîtront plus clairement à la lecture de la description qui suit, d'un mode de réalisation préférentiel, donné à titre d'exemple non limitatif, en référence aux dessins annexés dans lesquels :

- la figure 1 représente un schéma de principe d'un dispositif économiseur conforme à l'invention ;
- la figure 2 représente une vue schématique d'un tel dispositif montrant notamment le bloc de distribution en coupe longitudinale et axiale ;
- la figure 3 représente une vue de face détaillée en coupe longitudinale et axiale de ce bloc de distribution ;
- les figures 4 et 5 représentent respectivement les vues de dessus et de gauche du bloc illustré à la figure 3 ;
- les figures 6, 7 et 8 représentent respectivement les sections suivant les plans 6-6, 7-7 et 8-8 du bloc de la figure 3 ;
- la figure 9 représente une vue de face du couvercle supérieur de ce dispositif économiseur ;
- les figures 10 et 11 représentent respectivement les sections suivant les plans 10-10 et 11-11 de ce couvercle supérieur ;
- la figure 12 représente une vue de face du couvercle inférieur de ce dispositif économiseur ;
- les figures 13 et 14 représentent respectivement les sections suivant les plans 13-13 et 14-14 de ce couvercle inférieur ;
- et la figure 15 représente une vue schématique de ce dispositif économiseur pour un montage de comparateurs en batterie.

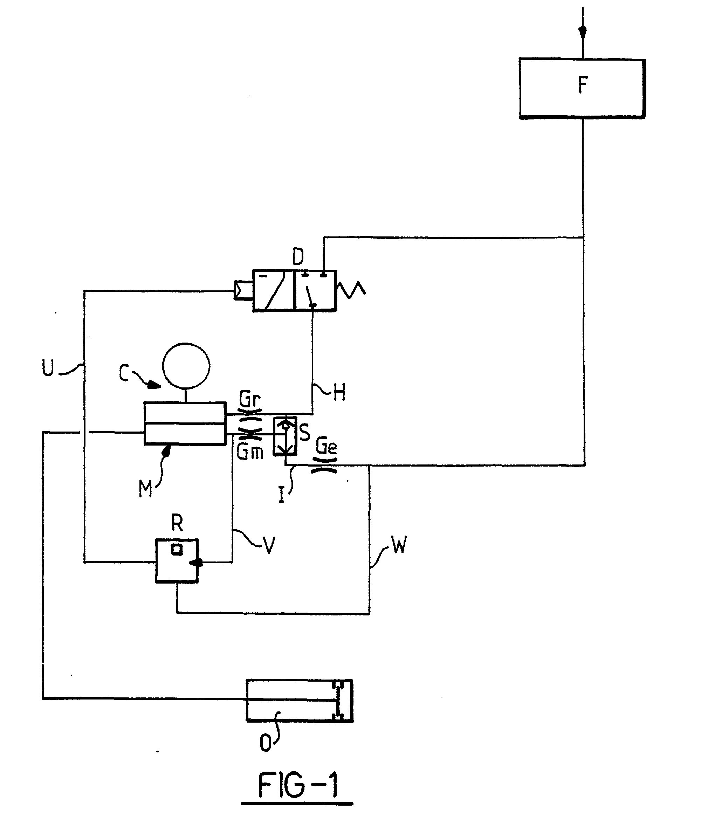

Conformément au schéma de principe illustré à la figure 1, ce dispositif économiseur d'air est monté sur un comparateur pneumatique C relié à un organe de mesure O. Il est interposé entre la capsule de mesure M de ce comparateur, et un distributeur à clapet D relié au réseau pneumatique par l'intermédiaire d'un filtre F.

Il comprend un gicleur de réglage Gr, un gicleur de mesure Gm, un gicleur économiseur Ge, un sélecteur de circuit S, un relais manostatique R, et des conduits de liaison appropriés.

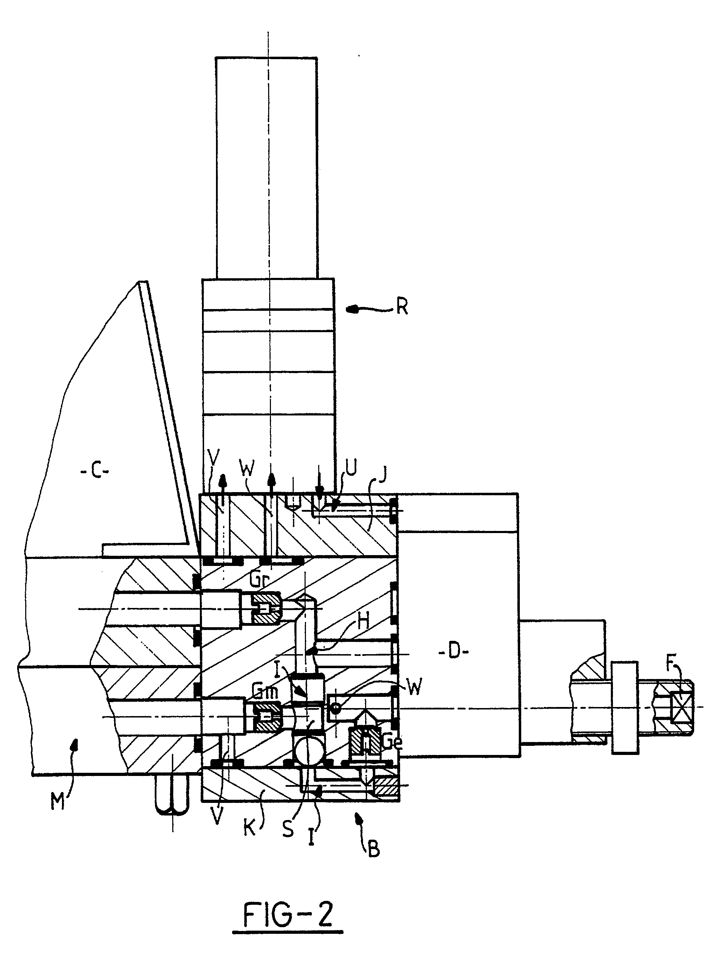

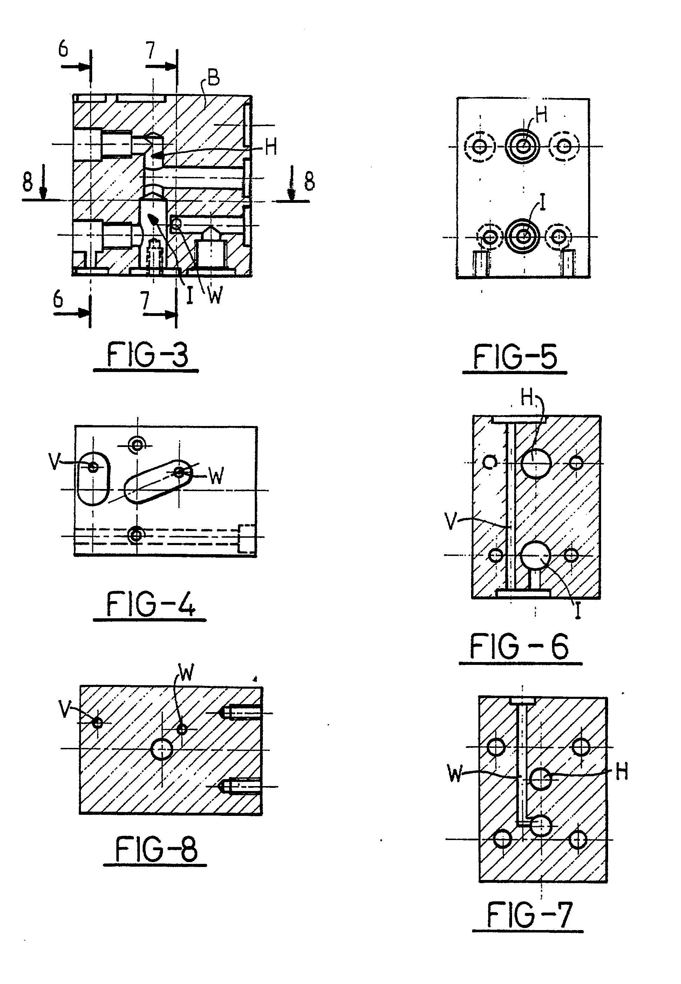

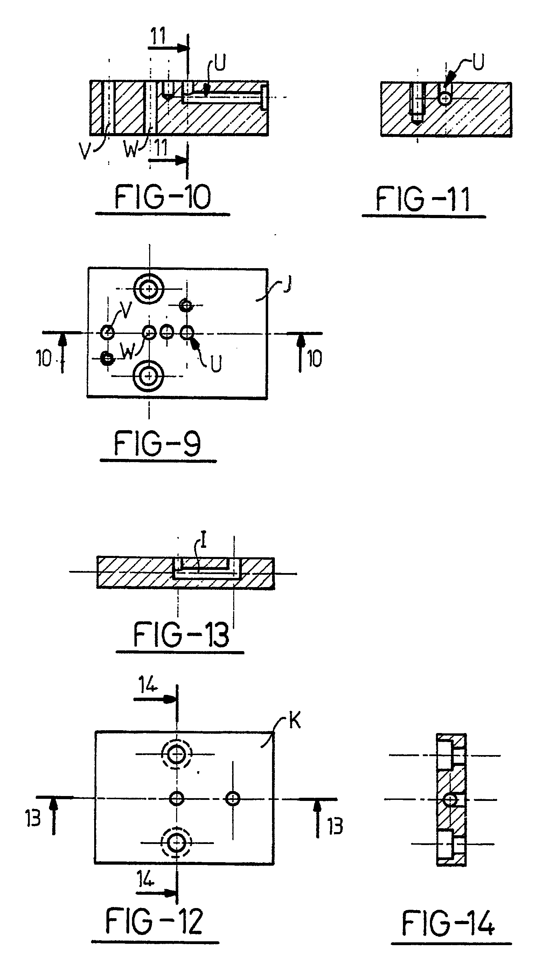

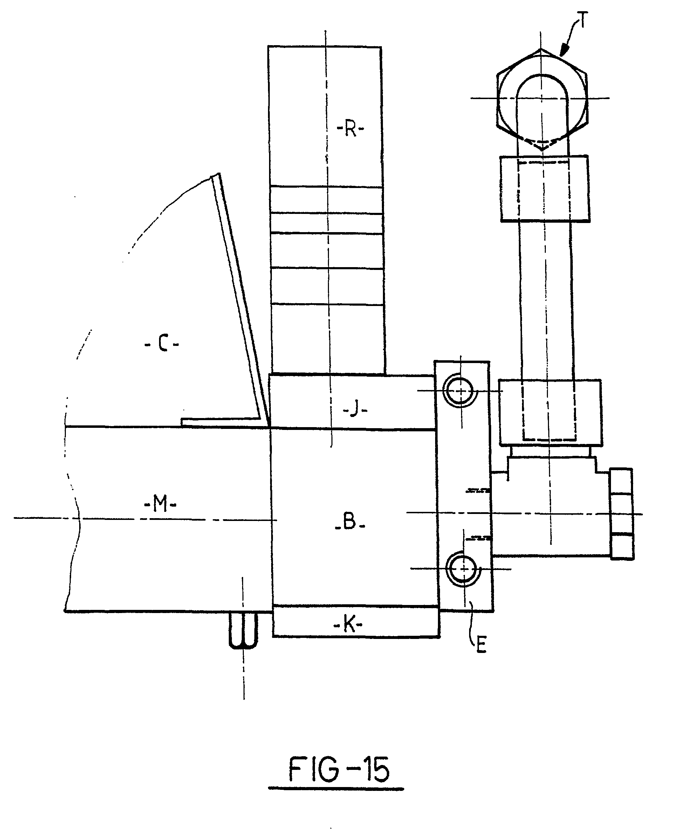

Tous ces éléments constitutifs sont détaillés sur les figures 2 à 15, où les figures 2 et 15 se rapportent respectivement à des montages autonomes et en batterie de comparateurs.

Les gicleurs Gr, Gm, Ge et le sélecteur de circuit S sont logés à l'intérieur d'un bloc de distribution B muni de deux couvercles supérieur J et inférieur K. Sur ce bloc sont fixés le relais manostatique R, et le distributeur à clapet D pour la version autonome ou une embase de raccordement E suivie d'une rampe T de raccordement aux autres comparateurs pour la version batterie.

Le gicleur de réglage Gr est disposé dans une canalisation supérieure H entre la capsule de mesure M et le distributeur D.

Le gicleur de mesure Gm est disposé dans une canalisation inférieure I entre la capsule de mesure M et le distributeur D.

Le gicleur économiseur Ge est disposé entre le gicleur de mesure Gm et le filtre F.

Le sélecteur de circuit S est placé entre les gicleurs économiseur Ge et de mesure Gm, et relié à la canalisation supérieure H en amont du gicleur de réglage Gr.

Le relais manostatique R est relié au distributeur D par un conduit U, à la canalisation inférieure I entre le gicleur de mesure Gm et la capsule de mesure M par un conduit V, et à l'amont du gicleur économiseur Ge par un conduit W.

Les conduits U, V, W et les canalisations H et I qui relient les trois gicleurs Gr, Gm, Ge, le sélecteur de circuit S, le comparateur C et le distributeurs D présentent tous une bague d'étanchéité aux interfaces bloc de distribution B/ comparateur C, distributeur D, couvercle supérieur J et couvercle inférieur K.

Le dispositif économiseur précédemment décrit fonctionne de la manière suivante, en référence aux figures 1 et 2.

L'air du réseau filtré en F est réglé à une pression sensiblement constante, par exemple quatre bars.

Dans les conditions d'attente, l'organe de mesure O est alimenté par le gicleur économiseur Ge car le sélecteur de circuit S ferme le circuit du gicleur de réglage Gr.

Dans les conditions de contrôle où une pièce coopère avec l'organe de mesure, la pression de mesure qui pilote le relais manostatique R augmente, ce qui déclenche le pilotage du distributeur D par ce relais manostatique. Le comparateur pneumatique C se trouve alors alimenté à plein débit pour fonctionner dans des conditions normales de mesure, le sélecteur de circuit S fermant le circuit du gicleur économiseur Ge.

Lorsque la pièce contrôlée ne coopère plus avec l'organe de mesure, la pression de mesure chute et le relais manostatique cesse de piloter le distributeur D. Le comparateur pneumatique se retrouve alimenté par le gicleur économiseur Ge.

## Revendications

1. Dispositif économiseur automatique d'air comprimé destiné à équiper un comparateur pneumatique (C) qui est relié à un organe de mesure (O), en étant interposé entre la capsule de mesure (M) de ce comparateur et un distributeur à clapet (D) relié au réseau pneumatique par l'intermédiaire d'un filtre (F), caractérisé en ce qu'il comprend:
   – un gicleur de réglage (Gr) disposé dans une canalisation supérieure (H) entre la capsule de mesure (M) et le distributeur (D);
   – un gicleur de mesure (Gm) disposé dans une canalisation inférieure (I) entre la capsule de mesure (M) et le distributeur (D);
   – un gicleur économiseur (Ge) disposé entre le gicleur de mesure (Gm) et le filtre (F);
   – un sélecteur de circuit (S) placé entre les gicleurs économiseur (Ge) et de mesure (Gm), et relié à la canalisation supérieure (H) en amont du gicleur de réglage (Gr);
   – et un relais manostatique (R) relié au distributeur (D), à la canalisation inférieure (I) entre le gicleur de mesure (Gm) et la capsule de mesure (M), et à l'amont du gicleur économiseur (Ge);

les gicleurs (Gr, Gm, Ge) et le sélecteur de circuit (S) étant logés à l'intérieur d'un bloc de distribution (B) muni de deux couvercles inférieur (K) et supérieur (J), et sur lequel sont fixés le distributeur à clapet (D) et le relais manostatique (R).

2. Dispositif économiseur suivant la revendication 1, caractérisé en ce que toutes les canalisations reliant les trois gicleurs (Gr, Gm, Ge), le sélecteur de circuit (S), le comparateur (C) et le distributeur (D) présentent une bague d'étanchéité aux surfaces de contact du bloc de distribution (B) par rapport au comparateur (C), au distributeur (D), au couvercle inférieur (K) et au couvercle supérieur (J).

## Patentansprüche

1. Automatische Druckluftspareinrichtung für die Montage auf einem pneumatischen Vergleicher (C), der mit einer Meßanordnung (O) verbunden ist, wobei sie zwischen der Meßkapsel (M) des Vergleichers und einem mit Ventilen versehenen Verteiler (D) angeordnet ist, der mit einem pneumatischen Leitungsnetz über ein Filter (F) verbunden ist, dadurch gekennzeichnet, daß sie aufweist:
   – eine Regeldüse (Gr) in einer oberen Leitung (H) zwischen der Meßkapsel (M) und dem Verteiler (D),
   – eine Meßdüse (Gm) in einer unteren Leitung (I) zwischen der Meßkapsel (M) und dem Verteiler (D),
   – eine Spardüse (Ge) zwischen der Meßdüse (Gm) und dem Filter (F),
   – einen Leitungswähler (5) zwischen der Spardüse (Ge) und der Meßdüse (Gm), der mit der oberen Leitung (H) stromaufwärts vor der Regeldüse (Gr) verbunden ist,
   – und ein Druck-Relais (R), verbunden mit dem Verteiler (D), der unteren Leitung (I) zwischen der Meßdüse (Gm) und der Meßkapsel (M) und mit einer Stelle stromaufwärts von der Spardüse (Ge);

wobei die Düsen (Gr, Gm, Ge) und der Leitungswähler (5) im Inneren eines Verteilerblocks (B) angeordnet sind, welcher mit einem unteren Deckel (K) und einem oberen Deckel (J) versehen ist und an dem der mit Ventilen versehene Verteiler (D) und das Druck-Relais (R) befestigt sind.

2. Spareinrichtung nach Anspruch 1, dadurch gekennzeichnet, daß alle die drei Düsen (Gr, Gm, Ge) verbindenden Leitungen, der Leitungswähler (S), der Vergleicher (C) und der Verteiler (D) einen Dichtring aufweisen, an den Kontaktflächen mit dem Verteilerblock (B) bezüglich des Vergleichers (C), des Verteilers (D), des unteren Deckels (K) und des oberen Deckels (J).

## Claims

1. An automatic compressed air economiser apparatus for equipping a pneumatic comparator (C) which is connected to a measuring member (O), being interposed between the measuring capsule (M) of said comparator and a valve-type distributor (D) connected to the pneumatic network by way of a filter (F), characterized in that it comprises:

 — a regulating jet (Gr) disposed in an upper conduit (H) between the measuring capsule (M) and the distributor (D);

 — a measuring jet (Gm) disposed in a lower conduit (I) between the measuring capsule (M) and the distributor (D);

 — an economiser jet (Ge) disposed between the measuring jet (Gm) and the filter (F);

 — a circuit selector (S) disposed between the economiser jet (Ge) and the measuring jet (Gm) and connected to the upper conduit (H) upstream of the regulating jet (Gr);

 — and a manostatic relay (R) connected to the distributor (D), to the lower conduit (I) between the measuring jet (Gm) and the measuring capsule (M), and upstream of the economiser jet (Ge);

the jets (Gr, Gm, Ge) and the circuit selector (S) being disposed within a distribution block (B) provided with two lower and upper covers (K and J respectively) and on which are fixed the valve-type distributor (D) and the manostatic relay (R).

2. An economiser apparatus according to claim 1 characterized in that all the conduits connecting the three jets (Gr, Gm, Ge), the circuit selector (S), the comparator (C) and the distributor (D) have a sealing ring at the contact surfaces of the distribution block (B) with respect to the comparator (C), the distributor (D), the lower cover (K) and the upper cover (J).

## FIG-1

EP 0 200 608 B1

FIG-2

FIG-3

FIG-4

FIG-8

FIG-5

FIG-6

FIG-7

EP 0 200 608 B1

FIG-10

FIG-11

FIG-9

FIG-13

FIG-12

FIG-14

FIG-15